# EUROPEAN PATENT APPLICATION

(11) **EP 2 031 865 A2**
(43) Date of publication of application: **04.03.2009**
(21) Application number: 08015325.7
(22) Date of filing: 29.08.2008
(51) Int. Cl.: H04N 5/232

(54) **Image input apparatus, and image input method**

(30) Priority: 30.08.2007 JP 2007224339
(71) Applicant: Kabushiki Kaisha Toshiba, Minato-ku, Tokyo 105-8001 (JP)
(72) Inventor: Sukegawa, Hiroshi, Tokyo 105-8001 (JP)
(74) Representative: HOFFMANN EITLE

(57) **Abstract**

The image input apparatus (100) performs detection of a facial area of a person based on an input image. The image input apparatus compiles information of a position where the facial area is detected within a specified time and manages as a map. From the map, the image input apparatus (100) specifies the area where the instability of the person facial area detection occurs, namely, the area where there is a case that the facial area is not detected among the areas where a facial area is normally to be detected. The image input apparatus (100) controls adjustment factors of a camera (101) so that accurate detection of the facial area is performed at the specified area.

## Description

The present invention relates to an image input apparatus, and an image input method by which an object for image input is extracted from an image which is picked up, for example, by a camera.

### 2. Description of the Related Art

Conventionally, there is an image input apparatus which detects a person and a facial area of the person as an object for image input. In the gazette of Japanese Patent No. 3502978, an image input apparatus, which performs camera adjustment taking a facial area of a person as a photometry area, is disclosed. Accordingly, the image input apparatus can input an image of a person who is an image input object and a facial area (a facial image) of the person under an appropriate condition for the image input.

However, with the image input apparatus of the art of the above-mentioned Japanese Patent No. 3502978, there is a case wherein a person who is an image input object and a facial area of the person cannot be detected when illumination change occurs in a background area by influence of extraneous light, such as sunlight, etc. Namely, if the background area is extremely bright due to backlight or if the background area is extremely dark due to little extraneous light, the image input apparatus cannot appropriately control input image adjustment factors of a camera (hereinafter, simply referred to as camera control).

Further, if a person who is an image input object is walking (moving), the image input apparatus cannot perform the camera control appropriately. This is because the position of the image input object area and the illumination for the adjustment of the camera changes in accordance with time.

In the gazette of Jpn. Pat. Appln. KOKAI Publication No. 2006-209277, an image input apparatus which appropriately performs the camera control by previously storing parameters for illumination change is disclosed.

However, the parameters to be stored to the image input apparatus change in accordance with the illumination condition and the positional relationship between the image input object area and the camera. Therefore, there is a problem that sufficient variations of the parameters are difficult to be stored to the image input apparatus.

In the gazette of Jpn. Pat. Appln. KOKAI Publication No. 2005-347873, an image input apparatus which detects an image input object by changing a parameter for illumination change from a large value to a small value is disclosed. The image input apparatus performs the camera control so that illumination in an image input object area becomes appropriate when an image input object is detected.

However, the image input apparatus has a problem that object-pursuing cannot be performed when the image input object is moving.

According to one embodiment of the invention, it is the purpose to provide an image input apparatus, and an image input method which can appropriately control input image adjustment factors of a camera even when illumination change or movement of an image input object occurs.

In order to attain the above object, in the embodiment of the invention, an image input apparatus according to the present invention, comprises: an image input unit which comprises at least one adjustment factor to adjust an input image and picks up an image of an image input target area; a detection unit which detects an area where a moving object appears out of the image picked up by the image input unit; a detection position management unit which manages information of a position where the moving object area is detected by the detection unit; and an input control unit which specifies an area where detection of the moving object area is difficult or where detection of the moving object area is impossible based on the information which is managed by the detection position management unit, and which controls the adjustment factor to adjust the input image of the image input unit based on the image of the specified area.

According to one embodiment of the invention, it is possible to provide an image input apparatus, and an image input method which can appropriately control input image adjustment factors of a camera even when illumination change or movement of an image input object occurs.

The invention can be more fully understood from the following detailed description when taken in conjunction with the accompanying drawings, in which:
FIG. 1 is a diagram which schematically shows a structure of an image input apparatus according to the first embodiment;
FIG. 2A is a schematic diagram for specifically explaining a process of a detection position management unit shown in FIG. 1;
FIG. 2B is a schematic diagram for specifically explaining a process of a detection position management unit shown in FIG. 1;
FIG. 2C is a schematic diagram for specifically explaining a process of a detection position management unit shown in FIG. 1;
FIG. 2D is a schematic diagram for specifically explaining a process of a detection position management unit shown in FIG. 1;
FIG. 3 is a diagram to which difference between the first probability distribution and the second probability distribution is plotted for each local area;
FIG. 4 is a flowchart for explaining a process which is performed with the image input apparatus shown in FIG. 1;
FIG. 5 is a diagram which schematically shows a structure of a person recognition apparatus according to the second embodiment; and
FIG. 6 is a flowchart for explaining a process which is performed with the person recognition apparatus shown in FIG. 5.

In the following, an image input apparatus, and image input method according to an embodiment of the present invention are specifically explained with reference to the drawings.

Firstly, the first embodiment of the present invention is explained.

Here, in the following explanation, an image input apparatus is taken as an example for explanation, the image input apparatus appropriately controls input image adjustment factors of a camera such as ITV (Industrial Television) camera, etc., for example, picks up an image of a moving object which moves, and detects an area where the moving object appears (a moving object area) from the picked up image.

However, the image input object, which is picked up by the image input apparatus according to the present invention, is not limited to a person. The image input object which is picked up by the image input apparatus can be, for example, any object which moves (the moving object) such as a vehicle traveling on a road and a number plate of the vehicle, etc. Further, as the fields to which the present invention is applied, applications such as a monitoring device which monitors a moving object, a person recognition apparatus which recognizes a specific person by utilizing a facial area of a person and the like are considered.

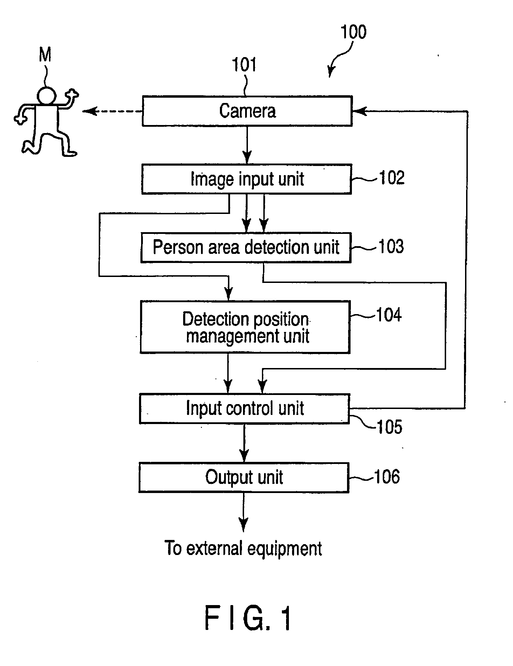

FIG. 1 is a diagram which schematically shows a structure of an image input apparatus 100 according to the first embodiment.

The image input apparatus 100 has a camera 101, an image input unit 102, a person area detection unit 103, a detection position management unit 104, an input control unit 105 and an output unit 106.

The camera 101 functions as an image input unit. The camera 101 picks up an image of an image input target area and inputs the image (an input image) to the image input apparatus 100. The camera 101 is consisted of, for example, an ITV camera. The camera 101 has at least one adjustment factor which adjusts the input image.

The camera 101 picks up an image of a specific area (an image input area). For example, the image input area is set to be a position through which an image input object is considered to pass. The camera 101 has, for example, an image input element such as a CCD sensor. The adjustment factors, which are included in the camera 101, are, for example, gain value, exposure value, shutter speed, white valance and the like.

The image input unit 102 performs image processing. For example, the image input unit 102 receives an input image which is picked up by the camera 101 and performs analog-to-digital conversion of the received input image.

The person area detection unit 103 functions as a detection unit. The person area detection unit 103 detects the area where a person exists (the person area) in the input image which is digitally converted by the image input unit 102. Namely, the person area detection unit 103 detects from the input image, an area of a face (a facial area) of a person (a pedestrian) M who moves in the image input area of the camera 101.

The person area detection unit 103 detects the facial area, for example, by acquiring correlation value while moving a previously prepared template in the input image. Here, the person area detection unit 103 detects the position where the maximum correlation value is calculated as the facial area.

There are several methods to detect a facial area. The image input apparatus 100 according to the present embodiment can be realized, for example, by utilizing another method of detecting a facial area such as an eigen space method, a subspace method or the like.

Further, the image input apparatus 100 also can detect a position of facial part such as an eye, a nose, a mouth and the like, for example, from the detected facial area. Specifically, it is capable to be realized with methods which are disclosed in Document 1 (Kazuhiro Fukui, Osamu Yamaguchi: Facial Feature Extraction by the Combination of Shape Extraction and Pattern Comparison, Paper Collection of Institution of Electronic Information and Communication [D], Vol. J80-D-11, No. 8, pp 2170-2177 [1997]), Document 2 (Mayumi Yuasa, Akiko Nakajima: Digital Make System Based on High-Accuracy Facial Feature Detection, Preliminary Paper Collection of the Tenth Image Sensing Symposium, pp 219-224 [2004]) or the like.

If one face is extracted from one input image, the image input apparatus 100 acquires correlation value with a template with respect to the whole image and detects the position and size of the maximum value as the facial area.

If a plurality of faces is extracted from one input image, the image input apparatus 100 acquires local maximum value of the correlation value with respect to the whole image and narrows candidate facial positions in consideration with overlaps in one image. Further, the image input apparatus 100 simultaneously detects a plurality of facial areas in consideration with relationship to the past images which were continuously input (the temporal change).

Here, although the image input apparatus 100 of the present embodiment is explained to detect a facial area of a person as an example, it is not limited to this. For example, it is also possible that the image input apparatus 100 detects a person area. The image input apparatus 100 is capable to detect a person area by utilizing the technology which is disclosed, for example, in Document 3 (Nobuto Matsuhira, Hideki Ogawa, Suguru Yoshimi: Life Supporting Robot Coexisting with Humans, Toshiba Review Vol. 60, No. 7, pp 112-115 [2005]).

The detection position management unit 104 functions as a detection position management unit. The detection position management unit 104 manages by periodically compiling the information of the position where the person area is detected by the person area detection unit 103. Namely, the detection position management unit 104 manages temporal change of the position information where the moving object is detected as a map.

The detection position management unit 104 divides the input image from the image input unit 102 into a plurality of local areas. The detection position management unit 104 manages the frequency of detecting the facial area within a previously determined specified time for each divided local area. Accordingly, the detection position management unit 104 prepares the frequency distribution (the probability distribution) in which the frequency of detecting the facial area by the person area detection unit 103 is compiled for each local area.

With the present embodiment, the detection position management unit 104 divides the input image into local areas of M x N pixels. The detection position management unit 104 prepares and manages the probability distribution of the detection frequency at least in two time zones.

The first probability distribution is the probability distribution of the detection frequency in time ΔT1 (the first specified time) which is set around 24 hours so as to cover, for example, illumination change conditions due to extraneous light such as the sun light and the like.

The second probability distribution is the probability distribution of detection frequency in time ΔT2 (the second specified time) which is set around 1 hour which is shorter than the first specified time and within which illumination change occurs.

The input control unit 105 functions as an input control unit. The input control unit 105 determines whether or not there is a case that the person area is not detected at least once at the position where the person area is to be detected based on the information which is managed by the detection position management unit 104.

If the person area is not detected at least one or more times at the position where the person area is to be detected, the input control unit 105 adjusts the adjustment factors of the camera 101 so that the person area can be detected at the position.

The output unit 106 functions as an output unit. The output unit 106 outputs the input image, etc., which is input by the image input unit 102 to external equipment.

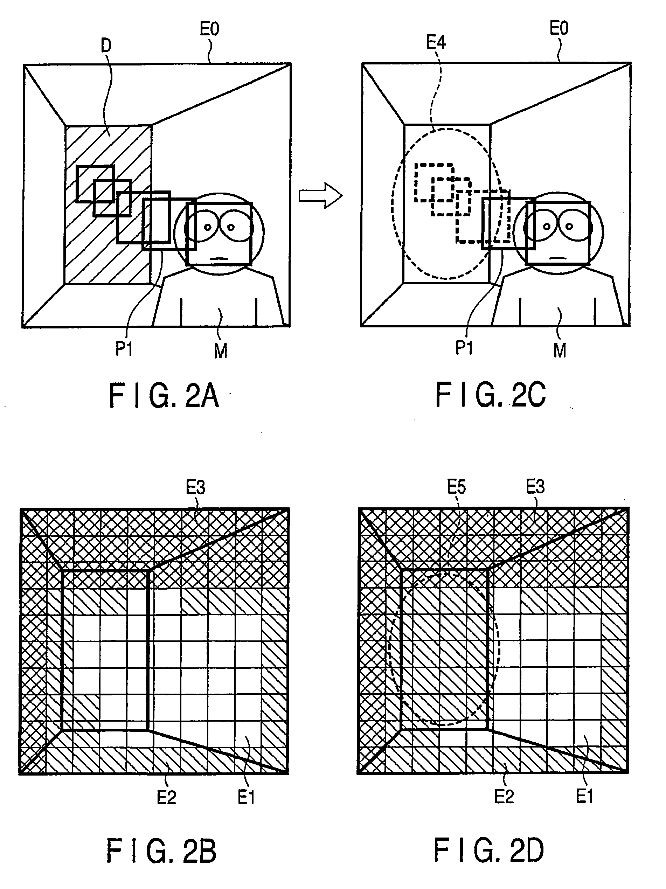

FIG. 2A, FIG. 2B, FIG. 2C and FIG. 2D are schematic diagrams for specifically explaining the process of the detection position managing unit 104 shown in FIG. 1.

FIG. 2A and FIG. 2B are diagrams in which detection positions of the facial areas are plotted.

FIG. 2A shows that there is a door (the slashed part) D in the image input area E0. The extraneous light such as the sunlight, etc., incidents through the door D. FIG. 2A shows the frequency distribution of the detection position information P1 of the facial area of the person M who is passing through the door D.

FIG. 2B is a diagram which shows the frequency distribution of the detection position of the facial area within time ΔT1 (the first probability distribution). The local area E1 which is indicated in FIG. 2B with pale color (non-slashed) shows the area where the detection frequency of the facial area is high. The local area E2 which is indicated in FIG. 2B with halftone (slashed) shows the area where the detection frequency of the facial area is medium. The local area E3 which is indicated in FIG. 2B with dark color (cross-slashed) shows the area where the detection frequency of the facial area is low.

The first probability distribution of the present embodiment is the frequency distribution of the detection position of the facial area in one day. Therefore, the first probability distribution covers the illumination change conditions. Accordingly, when the illumination conditions, etc., are arranged, the apparatus can recognize the area where a face exists. In this manner, the area where a face is possible to exist is managed regardless of on illumination conditions.

FIG. 2C and FIG. 2D are diagrams in which detection positions of the facial areas are plotted.

FIG. 2C shows that the door D shown in FIG. 2A is opened. FIG. 2C shows the frequency distribution of the detection position information P1 of the facial area of the person M who passes through the door D. FIG. 2C shows that the detection of the facial area of the person M is not correctly performed in the local area E4, namely, the position which overlaps to the opened door D.

FIG. 2D is a diagram which shows the frequency distribution of the detection position of the facial area within time ΔT2 (the second probability distribution). Compared with FIG. 2B, the local area E5 is newly indicated with halftone (slashed) in FIG. 2D. The local area E5 is the area which corresponds to the local area E4 shown in FIG. 2C.

Consequently, the local area E5 appears in the second probability distribution. The local area E5 is the area (unstable area) where the facial area is not to be detected in the second probability distribution while the facial area is detected in the first probability distribution. That is the unstable area is the area that a detection result is unstable in by the time.

In this manner, the second probability distribution to which fluctuating illumination and the like due to illumination conditions, etc., is reflected is simultaneously prepared.

The first probability distribution and the second probability distribution are respectively transmitted to the input control unit 105.

As mentioned above, the input control unit 105 calculates the difference between the first probability distribution and the second probability distribution for each local area.

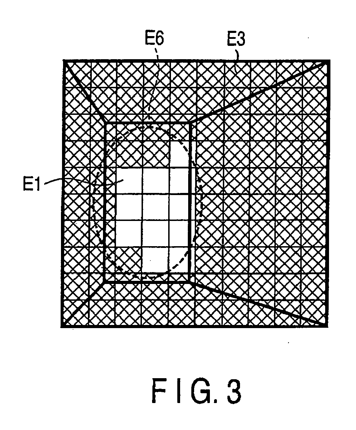

FIG. 3 is a diagram to which the difference between the first probability distribution and the second probability distribution is plotted for each local area.

The local area E3 which is indicated in FIG. 3 with dark color (cross-slashed) shows the area where the difference between the first probability distribution and the second probability distribution is small.

The local area E1 which is indicated in FIG. 3 with pale color (non-slashed) shows the area where the difference between the first probability distribution and the second probability distribution is large.

Namely, by calculating the difference between the first probability distribution and the second probability distribution, the input control unit 105 extracts the area E6 where the detection of the facial area becomes difficult due to the conditions other than the conditions which vary in accordance with time.

The input control unit 105 performs the camera control taking the extracted area E6 as the photometry area. Namely, the input control unit 105 estimates a control parameter of each adjustment factor of the camera 101 based on the illumination information at the photometry area. The input control unit 105 controls each adjustment factor of the camera 101 based on the estimated control parameter. Accordingly, the input controlling unit 105 adjusts the input image.

Namely, the input control unit 105 controls the adjustment factors which adjust the input image of the camera 101 so that the detection of the facial area is correctly performed at the area E6 where the facial area is considered to be detected.

For example, if the luminance at the area E6 is saturated in the bright direction, the input control unit 105 performs the control so that the luminance at the area E6 is not saturated. Further, for example, if the luminance at the area E6 fluctuates in a short time due to passing of a person through the area E6 and the like, the input control unit 105 changes the luminance based on the fluctuated luminance.

In a backlight condition, the luminance of the area E6 is saturated at bright value. Namely, it becomes to a highlighted state. If a person passes through the area E6, the luminance at the area E6 is lowered because the person obstructs the backlight.
The input control unit 105 controls the luminance at the area E6 which luminance is lowered so as to be changed to an appropriate value.

Here, if the control is performed specializing only to the area E6, there is a possibility to be the most impossible state of the facial area detection. Therefore, the input control unit 105 calculates the final control parameter in consideration with both the control parameter which is calculated based on the area E6 and the control parameter which is set based on the first probability distribution.

Accordingly, it becomes possible to accurately observe the change of the illumination conditions. Namely, the input control unit 105 can control the adjustment factors for the input image such as gain value, shutter speed, iris, etc., of the camera 101 to be appropriate to each of the bright case and the dark case.

Further, when the image input apparatus 100 according to the present embodiment is operated under the condition that the illumination change does not occurs, the first probability distribution and the second probability distribution become almost the same. Therefore, it is possible to perform the image input under the almost same condition. Consequently, the image input apparatus 100 according to the present embodiment can stably perform image input even if the input image adjustment factors of the camera 101 are controlled.

For example, the output unit 106 outputs at least one of the input images input by the image input unit 102, the image of the facial area which is detected by the person area detection unit 103 and the coordinate information of the facial area to the external equipment.

For example, if the assumed application is a monitoring device, the output unit 106 outputs the input image to a recording medium which performs recording and storing.

Further, the output unit 106 performs the output while indicating a frame at the facial area which is detected by the person area detection unit 103. In this manner, the existence of an observing object is displayed while being specified.

Furthermore, it is also possible that the output unit 106 outputs the input image to the recording medium, which performs recording and storing only if a person is detected based on the detection result of the person area detection unit 103.

Furthermore, the recognition processing can be performed under the condition that the effect of the illumination change is decreased by utilizing the present apparatus to an introducing part of the person recognition apparatus which recognizes whether or not a person is a specific person. In this manner, the accuracy of the recognition processing of the person recognition apparatus can be improved.

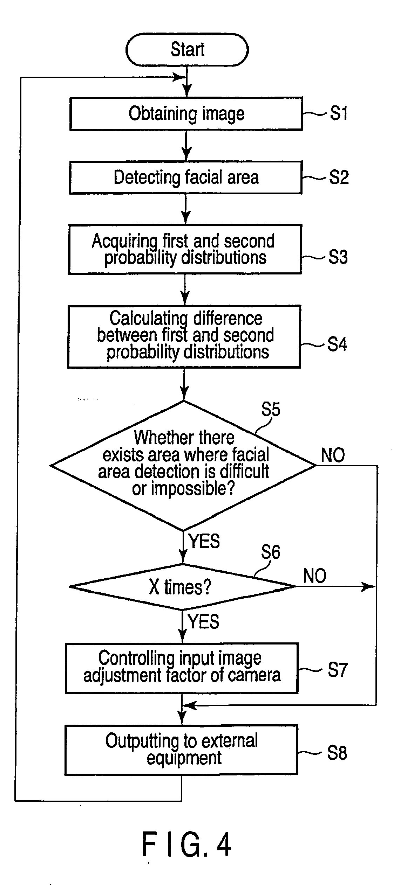

FIG. 4 is a flowchart for explaining the process which is performed by the image input apparatus 100 shown in FIG. 1.

For example, it is assumed that the camera 101 is picking up an image of the image input target area E0 which is shown in FIG. 2. The image input apparatus 100 transmits the image which is picked up by the camera 101 to the image input unit 102. In the image input apparatus 100, the image is digitized at the image input unit 102 and the digitized image is obtained (Step S1). In the image input apparatus 100, the obtained image is transmitted to the person area detection unit 103 and the detection position management unit 104 respectively.

The person area detection unit 103 detects the facial area of the person M who is existing in the image input target area E0 based on the image which is received from the image input unit 102 (Step S2). The person area detection unit 103 transmits the information of the detected facial area to the detection position management unit 104 and the input control unit 105 respectively.

The detection position management unit 104 divides the image which is received from the image input unit 102 into a plurality of local areas. The detection position management unit 104 compiles the position information of the facial area which is detected by the person area detection unit 103 within time ΔT1 and time ΔT2 for each local area and calculates the first and the second probability distributions (Step S3). Every time the facial area is detected by the person area detection unit 103, the detection position management unit 104 prepares the first and the second probability distributions by plotting the position information of the facial area for each local area. The detection position management unit 104 transmits the prepared first and the second probability distributions to the input control unit 105.

The input control unit 105 calculates for each local area, the difference between the first probability distribution and the second probability distribution which are received from the detection position management unit 104 (Step S4). Accordingly, the input control unit 105 determines whether or not there exists an area (unstable area) where the detection of the facial area is difficult or the detection of the facial area is impossible depending on points of time (Step S5). Namely, the input control unit 105 determines that the area, which has difference between the first probability distribution and the second probability distribution, is an area where the detection of the facial area is difficult or the detection of the facial area is impossible.

When it is determined that there exists an area where the detection of the facial area is difficult or the detection of the facial area is impossible (YES in Step S5), the input control unit 105 determines whether it is the previously specified X times or not for the area where the detection of the facial area is difficult or the detection of the facial area is impossible to be detected (Step S6). In the present embodiment, the explanation is based on the assumption that X times is three times. However, it is possible to be at least one or more times.

If it is the previously specified X times for the detection of the area where the detection of the facial area is difficult or the detection of the facial area is impossible to be determined (YES in Step S6), the input control unit 105 sets the area which is determined to be the area where the facial area detection is difficult or the facial area detection is impossible as the photometry area and controls the input image adjustment factors of the camera 101 (Step S7). Namely, the input control unit 105 estimates the control parameter based on the illumination information of the whole photometry area. The input control unit 105 controls the adjustment factors to adjust the input image of the camera 101 based on the estimated control parameter.

The output unit 106 outputs the image which is picked up by the camera 101 of which adjustment factors are controlled by the input control unit 105 to the external equipment (Step S8). Namely, the output unit 106 receives the image which is picked up by the camera 101 after the adjustment factors are controlled by the input control unit 105 through the image input unit 102. The output unit 106 outputs at least one of the input images, the image of the facial area which is detected by the person area detection unit 103 based on the input image and the coordinate information of the facial area which is detected by the person area detection unit 103 to the external equipment. The image input apparatus 100 then returns to Step S1 and repeats the operation from Step S1 through Step S8.

When it is determined that there does not exist an area where the facial area detection is difficult or the facial area detection is impossible in Step S5 (NO in Step S5) or when the detection of the area where the facial area detection is difficult or the facial area detection is impossible is determined not to be the previously specified X times in Step S6 (NO in Step S6), the image input apparatus 100 proceeds to Step S8.

The above-mentioned image input apparatus according to the first embodiment performs the detection of the facial area of a person based on the input image. The image input apparatus compiles the information of the position where the facial area is detected within a specified time and compiles the information as a map. From the map, the image input apparatus specifies the area where the instability of the facial area detection occurs. Namely, the image input apparatus specifies among the areas where the facial area is normally detected, the area where there is a case that the facial area is not detected. The image input apparatus controls the adjustment factors of a camera so that accurate detection of the facial area is performed at the specified area.

Accordingly, it becomes possible to provide an image input apparatus, and an image input method which can appropriately control the input image adjustment factors of a camera even when illumination change or movement of an image input object occurs.

Next, the second embodiment is explained.

In the following, a person recognition apparatus is taken as an example for explanation, the person recognition apparatus appropriately controls input image adjustment factors of a camera such as an industrial television (ITV) camera, etc., picks up an image of a moving person, detects an image input object area (a person area) from the picked up image, and determines whether or not the person is the previously registered person.

Further, as the fields to which the present invention is applied, applications such as a monitoring device which monitors a moving person, an access control system which controls the access of passers to a building or a corporation structure by performing biometric authentication utilizing a facial image of a person, a passer recognition at an area where many passers accesses such as commercial facilities, recreational facilities, transportation, etc., and the like are considered.

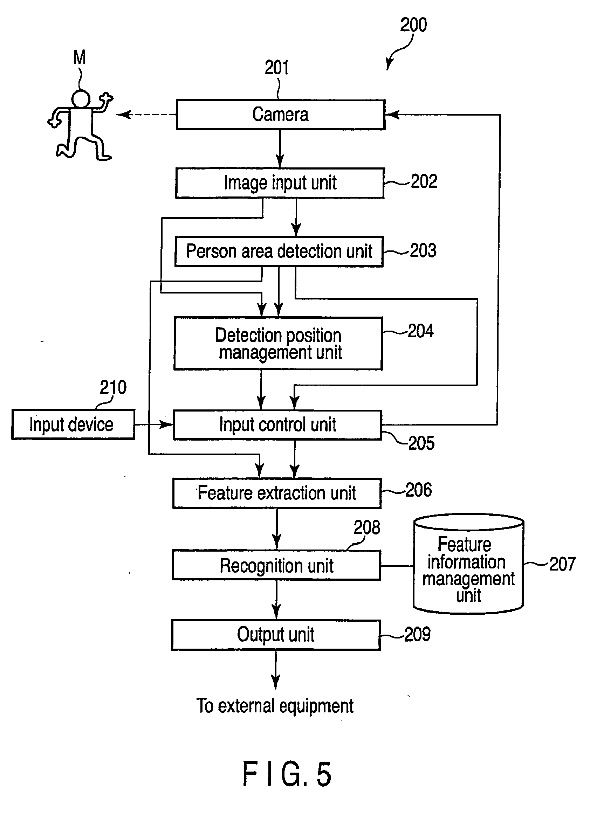

FIG. 5 is a diagram which schematically shows a structure of a person recognition apparatus 200 according to the second embodiment.

The person recognition apparatus 200 has a camera 201, an image input unit 202, a person area detection unit 203, a detection position management unit 204, an input control unit 205, a feature extraction unit 206, a recognition unit 208, an output unit 209 and an input device 210. Here, since the structures of the camera 201, the image input unit 202, the person area recognition unit 203, the detection position management unit 204, the input control unit 205 and the output unit 209 are similar to those of the camera 101, the image input unit 102, the person area detection unit 103, the detection position management unit 104, the input control unit 105 and the output unit 106 of the first embodiment, the detailed explanation is omitted.

The feature extraction unit 206 functions as a feature extraction unit. The feature extraction unit 206 extracts feature information from the image of the facial area which is detected by the person area detection unit 203. Namely, the feature extraction unit 206 extracts biometric information of a person of the facial image.

The recognition unit 208 functions as a recognition unit. The recognition unit 208 has a feature information management unit 207. The feature information management unit 207 stores facial feature information of a person. Namely, the feature information management unit 207 previously stores the feature information which is extracted from the facial image of the person who is to be an object of the present apparatus.

The recognition unit 208 performs comparison between the feature information which is extracted by the feature extraction unit 206 and the feature information which is stored at the feature information management unit 207. Namely, the recognition unit 208 determines whether or not feature information which matches to or approximates to the feature information extracted by the feature extraction unit 206 has been stored at the feature information management unit 207.

The feature extraction unit 206 clips the facial area based on the position of the facial part which is detected by the person area detection unit 203.
Namely, the feature extraction unit 206 clips the facial area (the image of the area of m pixels x n pixels) based on the position of the facial part which is detected by the person area detection unit 203. The feature extraction unit 206 extracts grayscale information of the image of the clipped facial area as a feature amount.

Here, the grayscale values of the image of the m pixels x n pixels area are directly utilized as the grayscale information. Namely, the information of m x n pixel dimension is utilized as the feature vector. The person recognition apparatus 200 calculates similarity degrees of a plurality of images by a simple similarity degree method. Namely, the person recognition apparatus 200 performs normalization so that the vector and the length of the vector are to be 1 respectively. The person recognition apparatus 200 calculates the similarity degree which shows the similarity among a plurality of feature vectors by calculating the inner product. If the image which is picked up by the camera 201 is one, the feature of the image can be extracted with the above-mentioned process. Further, by utilizing the dynamic image which is constructed with a plurality of continuous images for outputting the recognition result, the person recognition apparatus 200 can perform more accurate recognition processing. Therefore, the present embodiment is explained as taking a recognition processing which utilizes a dynamic image as an example.

If the recognition processing which utilizes a dynamic image is performed, the camera 201 continuously picks up images at the image input area. The feature extraction unit 206 respectively clips the facial area images (the m x n pixel images) from a plurality of continuous images which are picked up by the camera 201. The feature extraction unit 206 obtains the feature vector of the clipped plural facial area images for each image. The feature extraction unit 206 acquires the correlation matrix of the feature vector.

The feature extraction unit 206 acquires an orthonormal vector from the correlation matrix of the feature vector, for example, with Karhunen-Loeve (KL) expansion and the like. Accordingly, the feature extraction unit 206 can calculate and specify a subspace which shows the facial feature in the continuous images.

To calculate the subspace, the feature extraction unit 206 acquires the correlation matrix (or the covariance matrix) of the feature vector. The feature extraction unit 206 acquires the orthonormal vector (the eigen vector) by expanding the correlation matrix of the feature vector with KL expansion. In this manner, the feature extraction unit 206 calculates the subspace.

The feature extraction unit 206 selects k pieces of the eigen vectors which correspond to the eigen values in decreasing order of the eigen value. The feature extraction unit 206 represents the subspace with the set of k pieces of the selected eigen vectors.

In the present embodiment, the feature extraction unit 206 acquires the correlation matrix [Cd = ΦdΔdΦdT] based on the feature vector. The feature extraction unit 206 acquires a matrix Φd of the eigen vector by performing diagonalization to the correlation matrix [Cd = ΦdΔdΦdT]. The information, namely the matrix Φd, is the subspace which shows the facial feature of the person who is the recognition object.

Here, if a plurality of the facial areas is detected, the feature extraction unit 206 specifies the subspace by performing the above-mentioned process to each of the detected facial area.

The feature information management unit 207 stores and manages the facial feature information for identifying, namely specifying, the person. The facial feature information, which is stored at the feature information management unit 207, is the comparing object of the facial feature information which is calculated based on the image picked up by the camera 201.

In the present embodiment, the facial feature information stored at the feature information management unit 207 is a vector to which the feature is extracted with the similar process to the facial feature information which is calculated based on the image picked up by the camera 201. The facial feature information, which is stored at the feature information management unit 207, is, for example, a feature vector of m x n pixels. However, the facial feature information, which is stored at the feature information management unit 207, can be a facial image of the state before the feature is extracted. Further, the facial feature information, which is stored at the feature information management unit, can be the information which shows the subspace or the correlation matrix of the state before KL expansion is performed.

The feature information management unit 207 registers the facial feature information having an individual identification number as a key. Namely, the feature information management unit 207 stores the individual identification number and the facial feature information in correspondence with each other. Here, it is also possible that the feature information management unit 207 stores so that one individual identification number corresponds to a plurality of the facial feature information. If the recognition of a person is performed based on the picked up image, it is also possible that the person recognition apparatus 200 utilizes a plurality of facial feature information for the recognition.

The recognition unit 208 calculates the similarity degree with the subspace which is specified by the feature extraction unit 206 and one or plural facial feature information (here, the information indicating the subspace) which is stored at the feature information management unit 207. Accordingly, the recognition unit 208 determines whether or not the person appears in the image which is picked up by the camera 201.

If a plurality of persons appear in the image which is picked up by the camera 201, the recognition unit 208 determines for each facial area in the image whether or not the person corresponding to the facial feature information which is previously stored at the feature information management unit 207 appears. In this manner, the recognition unit 208 can perform the recognition processing against all persons who appear in the image.

There are several methods for calculating the similarity degree among a plurality of subspaces. The person recognition apparatus 200 according to the present embodiment calculates the similarity degree among a plurality of subspaces with a subspace method or a complex similarity degree method. Specifically, it is possible to be realized with a mutual subspace method which is disclosed, for example, in Document 4 (Kenichi Maeda, Teiichi Watanabe: Pattern Matching Method Introducing Regional Structure, Paper Collection of Institute of Electronics' Information and Communication Engineers [D], Vol. J68-D, No. 3, pp 345-352 [1985]).

With this method, recognition data in the previously stored registration information and input data are expressed as the subspace. Namely, the mutual subspace method specifies the facial feature information which is previously stored at the feature information management unit 207 and the feature information which is prepared based on the image picked up by the camera 201 as the subspace. With this method, the angle, which is formed by the two subspaces, is calculated as the similarity degree.

Here, it is explained to name the subspace which is calculated based on the input image as the input subspace. The recognition unit 208 acquires the correlation matrix [Cin = ΦinΔinΦinT] based on the input data sequence (the image picked up by the camera 201).

The recognition unit 208 acquires an eigen vector Φin by performing diagonalization to the correlation matrix [Cin = ΦinΔinΦinT]. The recognition unit 208 calculates the similarity degree with the subspace which id specified by Φin and the subspace which is specified by Φd. Accordingly, the recognition unit 208 acquires the similarity degree (0.0 to 1.0) between the two subspaces.

If a plurality of the facial areas exists in the input image, the recognition unit 208 sequentially performs the recognition processing for each facial area. Accordingly, the recognition unit 208 calculates the similarity degrees of all combinations between the facial feature information (the dictionary) which is stored at the feature information management unit 207 and the facial area images. Consequently, the recognition unit 208 can obtain the result of recognition processing against all persons in the input image. For example, if X persons are walking towards the present apparatus which stores Y members of dictionary, the recognition unit 208 performs X x Y times of the recognition processing, namely, the calculation of the similarity degree. Accordingly, the recognition unit 208 can output the result of the recognition processing against all the X persons.

If the image which matches to the dictionary stored in the feature information management unit 207 is not found in a plurality of the input images, namely, if the recognition result of the recognition unit 208 is not output, the recognition unit 208 repeats the recognition processing based on the next image which is picked up by the camera 201 (the image of the next frame).

In this case, the recognition unit 208 adds the correlation matrix which is input to the subspace, namely the correlation matrix of one frame, to the sum of correlation matrix of a plurality of past frames. The recognition unit 208 performs the calculation of the eigen vector again. The recognition unit 208 performs the preparation of the subspace again. Accordingly, the recognition unit 208 updates the subspace of the input image.

If the comparison is performed while continuously picking up facial images of a walking person, the recognition unit 208 sequentially updates the subspace. Namely, the recognition unit 208 performs the recognition processing every time an image is input. Accordingly, the accuracy of the comparison gradually is improved in accordance with the number of the picked up images.

The output unit 209 outputs the input image from the image input unit 202 or the facial area image or the feature information which is detected, for example, by the person area detection unit 203 to the external equipment. The output unit 209 outputs a control signal to the external equipment (a gate control signal, etc., to a gate device) in accordance with the recognition result of the recognition unit 208.

The input device 210 is an interface for inputting operation to the person recognition apparatus 200 for a user. The input device 210 is structured, for example, as a keyboard. Further, the input device 210 is structured as a touch panel integrally with a display device, for example, as the external equipment.

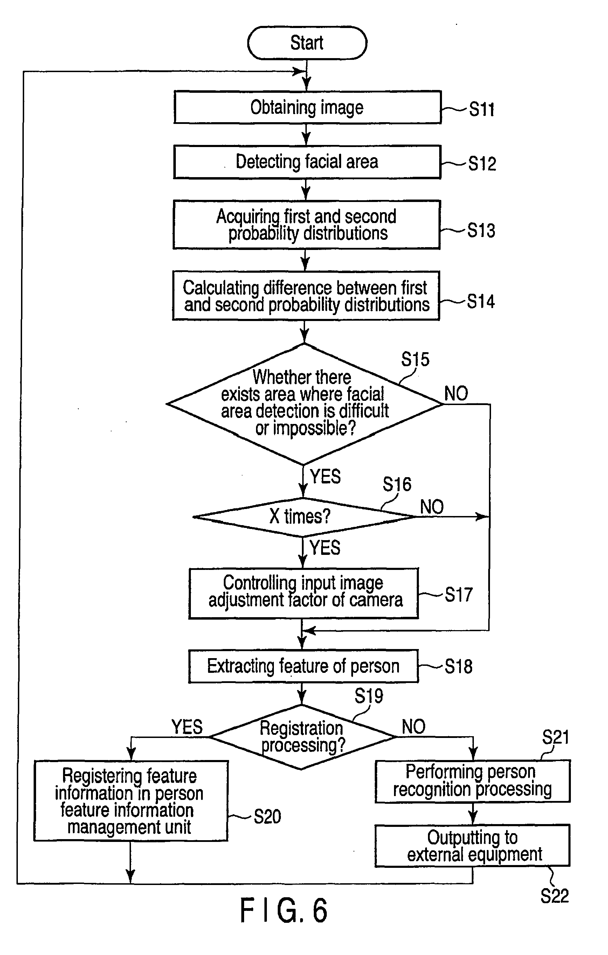

FIG. 6 is a flowchart for explaining the process which is performed by the person recognition apparatus 200 shown in FIG. 5.

For example, it is assumed that the camera 201 is picking up an image of the image input target area E0 which is shown in FIG. 2. The person recognition apparatus 200 transmits the image which is picked up by the camera 201 to the image input unit 202. In the person recognition apparatus 200, the image is digitized at the image input unit 202 and the digitized image is obtained (Step S11). In the person recognition apparatus 200, the obtained image is transmitted to the person area detection unit 203 and the detection position management unit 204 respectively.

The person area detection unit 203 detects the facial area of the person M who is existing in the image input target area E0 based on the image which is received from the image input unit 202 (Step S12). The person area detection unit 203 transmits the information of the detected facial area to the detection position management unit 204 and the input control unit 205 respectively.

The detection position management unit 204 divides the image which is received from the image input unit 202 into a plurality of local areas. The detection position management unit 204 compiles the position information of the facial area which is detected by the person area detection unit 203 within time ΔT1 and time ΔT2 for each local area and calculates the first and the second probability distributions (Step S13). Every time the facial area is detected by the person area detection unit 203, the detection position management unit 204 prepares the first and the second probability distributions by plotting the position information of the facial area for each local area. The detection position management unit 204 transmits the prepared first and the second probability distributions to the input control unit 205. Here, the detection position management unit 204 updates the position information every time the facial area is detected by the person area detection unit 203. Namely, the detection position management unit 204 sequentially updates the frequency distribution.

The input control unit 205 calculates for each local area, the difference between the first probability distribution and the second probability distribution which are received from the detection position management unit 204 (Step S14). Accordingly, the input control unit 205 determines whether or not there exists an area where the detection of the facial area is difficult or the detection of the facial area is impossible (Step S15). Namely, the input control unit 205 determines that the area, which has difference between the first probability distribution and the second probability distribution, is an area where the detection of the facial area is difficult or the detection of the facial area is impossible.

When it is determined that there exists an area where the detection of the facial area is difficult or the detection of the facial area is impossible (YES in Step S15), the input control unit 205 determines whether it is the previously specified X times or not for the area where the detection of the facial area is difficult or the detection of the facial area is impossible to be detected (Step S16). In the present embodiment, the explanation is based on the assumption that X is three; however, it is possible to be at least one.

If it is the previously specified X times for the detection of the area where the detection of the facial area is difficult or the detection of the facial area is impossible to be determined (YES in Step S16), the input control unit 205 sets the area which is determined to be the area where the facial area detection is difficult or the facial area detection is impossible as the photometry area and controls the input image adjustment factors of the camera 201 (Step S17). Namely, the input control unit 105 estimates the control parameter based on the illumination information of the whole photometry area. The input control unit 205 controls the adjustment factors to adjust the input image of the camera 201 based on the estimated control parameter.

The feature extraction unit 206 extracts a feature of the person (Step S18). Namely, the feature extraction unit 206 performs the extraction of the facial feature information based on the picked up image by the camera 201 after the adjustment factors are controlled.

When it is determined that there does not exist an area where the facial area detection is difficult or the facial area detection is impossible in Step S15 (NO in Step S15) or when the detection of the area where the facial area detection is difficult or the facial area detection is impossible is determined not to be the previously specified X times in Step S16 (NO in Step S16), the person recognition apparatus 200 proceeds to Step S18.

The recognition unit 208 determines whether or not it is the facial registration processing (Step S19). If it is determined to be the facial registration processing (YES in Step S19), the person recognition apparatus 200 performs the facial registration processing to register the facial feature information which is extracted in Step S18 in the feature information management unit 207 (Step S20). The person recognition apparatus 200 performs the facial registration processing in accordance with the operation which is input to the input device. Namely, when the operation to instruct the facial registration processing is input by the input device 210, the person recognition apparatus 200 prepares the facial feature information based on the facial area of the image which is picked up just before. The person recognition apparatus 200 registers the prepared facial feature information in the feature information management unit 207. After performing the facial registration processing, the person recognition apparatus 200 proceeds to Step S11.

If it is determined not to be the facial registration processing (NO in Step S19), the recognition unit 208 determine that the facial recognition processing is required. In this case, the recognition unit 208 performs the recognition processing of a person (Step S21). Namely, the recognition unit 208 compares the facial feature information which is extracted in Step S18 and the facial feature information of a person which is previously registered in the feature information management unit 207. In this manner, the recognition unit 208 determines whether or not the person existing in the image input area is the person who is previously registered in the feature information management unit 207.

The output unit 209 outputs the input image from the image input unit 202 or the facial area image or the feature information which is detected, 203 to the external equipment, by the person area detection unit 203 to the external equipment (Step S22). The output unit 209 outputs a control signal to the external equipment (a gate control signal, etc., to a gate device) in accordance with the recognition result of the recognition unit 208.

After outputting the result to the external equipment, the person recognition apparatus 200 proceeds to Step S11.

The above-mentioned person recognition apparatus according to the second embodiment performs the detection of the facial area of a person based on the input image. The person recognition apparatus compiles the information of the position where the facial area is detected within a specified time and manages the information as a map. From the map, the person recognition apparatus specifies the area where the instability of the facial area detection occurs. Namely, the person recognition apparatus specifies among the areas where the facial area is normally detected, the area where there is a case that the facial area is not detected. The person recognition apparatus controls the adjustment factors of a camera so that accurate detection of the facial area is performed at the specified area. In this manner, the person recognition apparatus can identify a person with higher precision.

Accordingly, it becomes possible to provide an image input apparatus, and an image input method which can appropriately control the input image adjustment factors of a camera even when illumination change or movement of an image input object occurs.

## Claims

1. An image input apparatus (100) **characterized by** comprising:
an image input unit (101) which comprises at least one adjustment factor to adjust an input image and picks up an image of an image input target area;
a detection unit (103) which detects an area where a moving object appears out of the image picked up by the image input unit;
a detection position management unit (104) which manages information of a position where the moving object area is detected by the detection unit; and
an input control unit (105) which specifies an unstable area where detection of the moving object area is difficult or where detection of the moving object area is impossible based on the information which is managed by the detection position management unit, and which controls the adjustment factor to adjust the input image of the image input unit based on the image of the specified area.

2. An image input apparatus (100) **characterized by** comprising:
an image input unit (101) which comprises at least one adjustment factor to adjust an input image and picks up an image of an image input target area;
a detection unit (103) which detects an area where a moving object appears from the image which is picked up by the image input unit;
a detection position management unit (104) which manages temporal change of information of a position where the moving object area is detected by the detection unit as a map;
an input control unit (105) which determines based on the information which is managed by the detection position management unit whether or not there exists an unstable area where the detection of the moving object area is difficult or the detection of the moving object area is impossible depending on points of time, and which controls the adjustment factor to adjust the input image of the image input unit corresponding to the unstable area in the case of the determination that there exists the unstable area; and
an output unit (106) which outputs the image input by the image input unit to external equipment.

3. The image input apparatus according to claim 2,
**characterized in that** the detection position management unit divides the image which is picked up by the image input unit into local areas, calculates a first probability distribution by compiling the position information of the moving object area which is detected by the detection unit within a first specified time for each local area, and calculates a second probability distribution by compiling the position information of the moving object area which is detected by the detection unit within a second specified time which is shorter than the first specified time for each local area, and
wherein the input control unit acquires difference between the first probability distribution and the second probability distribution, and determines that a local area where the difference occurs is the unstable area.

4. The image input apparatus according to claim 3, **characterized in that** the input control unit acquires the difference between the first probability distribution and the second probability distribution, estimates a control parameter by taking a local area where the difference occurs as a photometry area, and controls the adjustment factor to adjust the input image of the image input unit based on the estimated control parameter.

5. The image input apparatus according to claim 2, **characterized in that** the detection unit detects any of a facial area where a face of a person appears, an area where a whole body of a person appears and an area where a whole vehicle appears as the moving object area.

6. The image input apparatus according to claim 2,
**characterized in that** a feature extraction unit (206) which extracts feature information based on the image of the person area of the person as a moving object which is detected by the detection unit; and
a recognition unit (208) which compares the feature information extracted by the feature extraction unit and previously registered feature information and recognizes the person who exists in the image input target area.

7. An image input method of an image input apparatus which comprises an image input unit which has at least one adjustment factor to adjust an input image, the method **characterized by** comprising:
picking up an image of an image input target area by the image input unit;
detecting an area where a moving object appears from the picked up image;
managing temporal change of position information of the detection of the moving object area where the moving object is detected as a map;
determining based on the map whether or not there exists an unstable area where the detection of the moving object area is difficult or the detection of the moving object area is impossible depending on points of time;
controlling the adjustment factor to adjust the input image of the image input unit corresponding to the unstable area in the case of determination that there exists the unstable area; and
outputting the image input by the image input unit to external equipment.

8. The image input method according to claim 7, **characterized by** comprising:
dividing the image which is picked up by the image input unit into local areas;
calculating a first probability distribution by compiling the position information of the moving object area which is detected within a first specified time for each local area;
calculating a second probability distribution by compiling the position information of the moving object area which is detected within a second specified time which is shorter than the first specified time for each local area;
acquiring the difference between the first probability distribution and the second probability distribution; and
determining that a local area where the difference occurs is the unstable area.

9. The image input method according to claim 8, **characterized by** comprising:
acquiring the difference between the first probability distribution and the second probability distribution;
estimating a control parameter by taking a local area where the difference occurs as a photometry area; and
controlling the adjustment factor to adjust the input image of the image input unit based on the estimated control parameter.

10. The image input method according to claim 7, **characterized by** comprising:
extracting feature information based on the image of the detected person area of the person as a moving object;
comparing the extracted feature information and previously registered feature information; and
recognizing the person who exists in the image input target area.
